# EUROPEAN PATENT SPECIFICATION

(11) **EP 3 127 038 B1**
(45) Date of publication and mention of the grant of the patent: **29.04.2020**
(21) Application number: 15709644.7
(22) Date of filing: 03.03.2015
(51) Int. Cl.: H04W 12/02, G06F 21/62, H04L 29/06

(54) **METHOD AND SYSTEM FOR PROTECTING AND/OR ANONYMIZING A USER IDENTITY AND/OR USER DATA OF A SUBSCRIBER OF A DATA PROTECTION SERVICE, MOBILE COMMUNICATION NETWORK, PROGRAM AND COMPUTER PROGRAM PRODUCT**
VERFAHREN UND SYSTEM ZUM SCHUTZ UND/ODER ZUR ANONYMISIERUNG EINER BENUTZERIDENTITÄT UND/ODER VON BENUTZERDATEN EINES TEILNEHMERS EINES DATENSCHUTZDIENSTES, MOBILES KOMMUNIKATIONSNETZWERK, PROGRAMM UND COMPUTERPROGRAMMPRODUKT
PROCÉDÉ ET SYSTÈME POUR PROTÉGER ET/OU ANONYMISER L'IDENTITÉ D'UN UTILISATEUR ET/OU DES DONNÉES D'UTILISATEUR D'UN ABONNÉ D'UN SERVICE DE PROTECTION DE DONNÉES, RÉSEAU DE COMMUNICATION MOBILE, PROGRAMME ET PRODUIT DE PROGRAMME INFORMATIQUE

(30) Priority: 31.03.2014 EP 14162870
(43) Date of publication of application: 08.02.2017
(73) Proprietor: Deutsche Telekom AG, 53113 Bonn (DE)
(72) Inventor: THOMAS, Graham, Camberley Surrey GU15 1PN (GB)
(74) Representative: Schwöbel, Thilo K.
(86) International application number: PCT/EP2015/054370
(87) International publication number: WO 2015/150006

(56) References cited:
- US-A1- 2013 273 886
- US-A1- 2014 059 693

## Description

### BACKGROUND

The present invention relates to a method for protecting and/or anonymizing a user identity and/or user data of a subscriber of a data protection service.

Furthermore, the present invention relates to a system for protecting and/or anonymizing a user identity and/or user data of a subscriber of a data protection service.

Additionally, the present invention relates to a mobile communication network suitable for protecting and/or anonymizing a user identity and/or user data of a subscriber of a data protection service.

Some third party services, e.g. so called context-aware services, typically use contextual elements to learn about a user's behaviour and situation, wherein smart recommendations may be provided to the user. For example, a service may ask to access email and other user data in order to act as a personal assistant. However, the third party services require personal information of the user in order to provide the service targeted to the user. Thus, the privacy protection of the user is relatively low because personal information may be misused or sold to other organizations by the companies associated with the third party services. US 2014/0059693 A1 discloses a method for managing privacy of personal bank account information which involves associating shipping identifier with a user identifier, where the address information of an anonymous user is obtained from a shipping entity.

### SUMMARY

An object of the present invention is to provide a method, a system and a mobile communication network for protecting and/or anonymizing a user identity and/or user data of a subscriber of a data protection service such that the user-convenience is improved with regard to third party services being provided via the telecommunications network.

The object of the present invention is achieved by a method for protecting and/or anonymizing a user identity and/or user data of a subscriber of a data protection service,
wherein the data protection service is accessed, via a telecommunications network, by means of a computing device of the subscriber of the data protection service, the computing device being connected to the telecommunications network,
wherein in case that a third party service is accessed by the computing device via the telecommunications network, the third party service receives user related data, the user related data being data related to the user identity and/or user data, wherein accessing the third party service via the data protection service involves a transmission of the user related data such that the user identity and/or the user data are at least partly protected and/or anonymized with respect to the third party service
-- by means of at least partly avoiding the transmission of the plaintext of the user identity and/or the user data to the third party service, or
-- by means of the user related data - transmitted to the third party service - being modified data with respect to the user identity and/or user data of the subscriber, wherein the data protection service creates a digital passport depending on the user identity and/or user data of the subscriber and further depending on authorization information of the subscriber, wherein the subscriber provides the authorization information for the third party service.

According to the present invention it is thereby advantageously possible to use third party services - which typically require a user's identity and/or user data (personal data) - such that the user-convenience is improved, in particular with regard to information security and/or privacy protection. Preferably, the information security is improved with regard to user data and/or user identity because third party services may be used either without or only by partly providing the user data and/or user identity (in form of the user related data) to the third party service. Misuse of the personal information by a third party is thereby advantageously inhibited or at least restrained. Preferably, the data protection service is therefore also called a trusted provider. For example, the third party service is a payment service, an application service or electronic commerce service.

According to a preferred embodiment of the present invention, for a first part of the user identity and/or user data, the user related data comprise the plaintext of the user identity and/or user data, and wherein for a second part of the user identity and/or user data, the transmission to the third party service is either avoided or the user related data are modified data with respect to the second part of the user identity and/or user data.

According to the present invention it is thereby advantageously possible to provide at least the second part of the user identity and/or user data to the third party service by means of a secure method. For example, the data protection service shares the first part (of the user identity and/or user data) openly and the second part (of the user identity and/or user data) in a protected format with the third party service.

According to a preferred embodiment of the present invention, the user identity and/or user data are completely protected and/or anonymized with respect to the third party service
-- by means of at least partly avoiding the transmission of the plaintext of the user identity and/or the user data to the third party service, or
-- by means of the user related data - transmitted to the third party service - being modified data with respect to the user identity and/or user data of the subscriber.

According to the present invention it is thereby advantageously possible to provide the complete user identity and/or user data to the third party service by means of a secure method. For example, the data protection service shares all data in a protected format with the third party service.

Within the context of the presented invention, preferably at least a first or a second security level is selected by the subscriber of the computing device with regard to the access to the third party service to the user related data. Preferably, when the first security level (concierge level) is selected, the user identity and/or user data are completely protected and/or anonymized with respect to the third party service. Preferably, when the second security level (protected level) is selected, only a part of the user identity and/or user data is protected and/or anonymized with respect to the third party service.

According to a preferred embodiment of the present invention, the telecommunications network is a mobile communication network, and the computing device is a mobile computing device, especially a mobile phone, a smart phone, a tablet computer, or another portable computing device.

According to the present invention it is thereby advantageously possible to provide the method for protecting and/or anonymizing the user identity and/or user data of the subscriber of the data protected service such that the user convenience is further enhanced.

According to a preferred embodiment of the present invention, the third party service is an application provided to the computing device, wherein the application is executed on the computing device or on a network node of the telecommunications network, wherein by accessing the third party service via the data protection service the behaviour of the application is modified regarding the transmission of the user related data such that the user identity and/or the user data are at least partly protected and/or anonymized with respect to the third party service.

According to the present invention it is thereby advantageously possible to modify the behaviour of the application by means of applying a response and/or permission approach. Preferably, the behaviour of the application is modified depending on a response and/or permission method being carried out.

According to a preferred embodiment of the present invention, the data protection service comprises a response system for carrying out the response method, wherein the third party service transmits a request message to the response system, the request message being configured to request for user data and/or user identity associated with the subscriber of the data protection service, wherein the response system transmits a response message in response to the request message, wherein the response message comprises the user related data such that the user identity and/or the user data are at least partly protected and/or anonymized with respect to the third party service.

According to the present invention, it is thereby advantageously possible to efficiently hide the user identity and/or user data from the third party service. Preferably, the user related data are configured such that the third party service receives the requested information without sharing the core profile data of the subscriber. For example, the user data may be related to a birthday of the subscriber. The response message may comprise the user related data in the form of a date, e.g. May 20th, rather than the date of birth.

According to a preferred embodiment of the present invention, the data protection service is configured such that the subscriber may register or login with the data protection service using the computing device. In particular, the data protection service provides a login interface for the subscriber. Preferably, the login interface is a graphical user interface comprising an icon, e.g. a TrustMe icon, to be used for login. Preferably, a user account is generated for the subscriber, wherein personal details and/or other configuration details are stored such that the subscriber does not need to enter in the user identity and/or user data each time when the subscriber logs in to the data protection service. It is thereby advantageously possible to improve the user convenience, in particular with respect to the transmission of the user related data to the third party service.

According to a preferred embodiment of the present invention, the method comprises anonymizing the user identity and the user data such that, by analysing the user related data transmitted to the third party service, the user identity associated with the computing device is hidden.

According to the present invention it is thereby advantageously possible to protect and/or anonymize the user identity and/or user data of the subscriber of the data protection service such that the user-convenience is improved with regard to the access of third party services provided via the telecommunications network.

The present invention also relates to a system for protecting and/or anonymizing a user identity and/or user data of a subscriber of a data protection service, the system comprising the data protection service, a telecommunications network, and a computing device,
wherein the system is configured such that the data protection service is accessed, via the telecommunications network, by means of the computing device of the subscriber of the data protection service, the computing device being connected to the telecommunications network,
wherein the system is configured such that in case that a third party service is accessed by the computing device via the telecommunications network, the third party service receives user related data, the user related data being data related to the user identity and/or user data, wherein the system is configured such that accessing the third party service via the data protection service involves a transmission of the user related data such that the user identity and/or the user data are at least partly protected and/or anonymized with respect to the third party service
-- by means of at least partly avoiding the transmission of the plaintext of the user identity and/or the user data to the third party service, or
-- by means of the user related data - transmitted to the third party service - being modified data with respect to the user identity and/or user data of the subscriber, wherein the data protection service is configured to create a digital passport depending on the user identity and/or user data of the subscriber and further depending on authorization information of the subscriber, wherein the subscriber provides the authorization information for the third party service.

According to the present invention it is thereby advantageously possible to protect and/or anonymize the user identity and/or user data of the subscriber of a data protection service such that the user-convenience is improved with regard to the access of third party services provided via the telecommunications network. In particular, misuse of personal data is inhibited. The system allows the subscriber to use third party services that require the use of the user related data under improved information security conditions.

According to a preferred embodiment of the present invention, the system is configured such that for a first part of the user identity and/or user data, the user related data comprise the plaintext of the user identity and/or user data, and wherein the system is configured such that for a second part of the user identity and/or user data, the transmission to the third party service is either avoided or the user related data are modified data with respect to the second part of the user identity and/or user data.

According to the present invention it is thereby advantageously possible to provide the user related data to the third party service such that the third party service receives only the first part of the user data and/or user identity in plaintext. Thereby, a second security level (protected level) is realized.

According to a preferred embodiment of the present invention, the system is configured such that the user identity and/or user data are completely protected and/or anonymized with respect to the third party service
-- by means of at least partly avoiding the transmission of the plaintext of the user identity and/or the user data to the third party service, or
-- by means of the user related data - transmitted to the third party service - being modified data with respect to the user identity and/or user data of the subscriber.

According to the present invention it is thereby advantageously possible to provide the user related data to the third party service such that the third party service receives the complete user data and/or user identity in a secured way. Thereby, a first security level (concierge level) is realized.

According to a preferred embodiment of the present invention, the telecommunications network is a mobile communication network, and the computing device is a mobile computing device, especially a mobile phone, a smart phone, a tablet computer, or another portable computing device.

According to the present invention it is thereby advantageously possible to provide the method for protecting and/or anonymizing the user identity and/or user data of the subscriber of the data protected service such that the user convenience is further enhanced.

Furthermore, the present invention relates to a mobile communication network suitable for protecting and/or anonymizing a user identity and/or user data of a subscriber of a data protection service in a system according to the present invention.

Furthermore, the present invention relates to a program comprising a computer readable program code which, when executed on a computer or on a computing device or on a network component of a telecommunications network or in part on a computing device and in part on a network component of a telecommunications network, causes the computer or the computing device and/or the network component of the telecommunications network to perform a method according to the present invention.

Furthermore, the present invention relates to a computer program product for using a machine type communication device with a telecommunications network, the computer program product comprising a computer program stored on a storage medium, the computer program comprising program code which, when executed on a computer or on a computing device or on a network component of a telecommunications network or in part on a computing device and in part on a network component of a telecommunications network, causes the computer or the computing device and/or the network component of the telecommunications network to perform a method according to the present invention.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

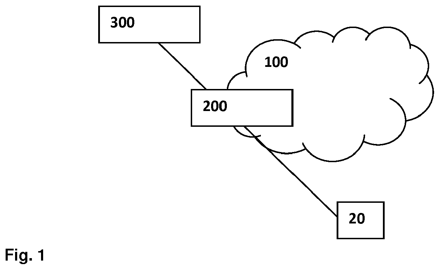

Figure 1 schematically illustrates a system according to the present invention.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a system according to the present invention is illustrated schematically. The system is configured for protecting and/or anonymizing a user identity and/or user data of a subscriber of a data protection service 200. The system comprises the data protection service 200, a telecommunications network 100, and a computing device 20.

According to the present invention, the telecommunications network 100 is preferably an Internet Protocol (IP) based telecommunications network 100. The telecommunications network 100 may include any landline and/or mobile computer network, for example the Internet and/or any telephone network.

The computing device 20 is a computing device of the subscriber of the data protection service 200. The computing device 20 is connected to the telecommunications network 100. The computing device 20 is preferably a personal computer or mobile computer, for example a tablet computer or smartphone or any other computing device.

The system is configured such that the data protection service 200 is accessed, via the telecommunications network 100, by means of the computing device 20 of the subscriber of the data protection service 200. Preferably, the subscriber - which is herein also called a user of the computing device 20 - is registered with the data protection service 200, wherein a personal account is set-up for the user. The data protection service 200 is configured to create a digital passport depending on user data and/or user identity (personal data) and further depending on authorization information of the user. The user provides the authorization information (e.g. a permission or level of access) for the third party service 300. In particular, the digital passport is controlled by the user of the computing device 20 and may be updated over time.

The system is configured such that in case that a third party service 300 is accessed by the computing device 20 via the telecommunications network 100, the third party service 300 receives user related data. The user related data are data related to the user identity and/or user data. The user data and/or user identity includes, for example, at least one of the following: name, home address, work address, date of birth, sex, marital status, family details, health details, social network details, email details, calendar/contacts details, bank details, other service provider details e.g. airlines, insurance companies, ecommerce companies, location, devices, personal preferences (profile), internet favorites/bookmarks and usage, safety preferences. It will also be possible to store the digital identity of the subscriber. Preferably, the data protection service 200 is configured such that user identity and/or user data may be added to the digital passport, e.g. in the form of data fields. Preferably, one or more data fields are specified either by the third party service 300 (in case a data element is required which data element is not yet comprised by the digital passport) or the one or more data fields are entered by the user. The data protection service 200 is accessible from any computing device 20 connected to the telecommunications network 100.

Preferably, the data protection service 200 comprises an application interface for communication with a developer of a third party service 300. Preferably, the application interface is configured to connect the third party service 300 (e.g. any application or internet service) to the data protection service 200 such that the third party service 300 is certified as linked to the data protection service 200. Preferably, the data protection service is configured to allow or deny access to third party services. Thereby, it is advantageously possible to exclude illegal or blacklisted services.

According to an embodiment of the system, the system is configured such that accessing the third party service 300 via the data protection service 200 involves a transmission of the user related data such that the user identity and/or the user data are at least partly protected and/or anonymized with respect to the third party service 300 by means of at least partly avoiding the transmission of the plaintext of the user identity and/or the user data to the third party service 300. According to another embodiment of the system, the system is configured such that accessing the third party service 300 via the data protection service 200 involves a transmission of the user related data such that the user identity and/or the user data are at least partly protected and/or anonymized with respect to the third party service 300 by means of the user related data - transmitted to the third party service 300 - being modified data with respect to the user identity and/or user data of the subscriber. Preferably, modified data means that any direct association of the subscriber to the user data and/or user identity is removed, wherein the user related data is provided in a form that can be used by the third party service. Preferably, the subscriber is thereby enabled to control whether the user data and/or user identity is shared with a third party service 300. In particular, the subscriber is enabled to configure the data protection service 200 such that the user data and/or user identity are at least partly shared openly or at least partly shared securely.

Preferably, the user related data are generated depending on the user data and/or user identity by using a request based method, a protected identity method and/or a permission based method.

In case the request based method is used, the third party service 300 requests user related data, the user related data being requested from the data protection service 200, e.g. via the application interface. The data protection service 200 requests, depending on the request of the user related data by the third party service, from the subscriber at the computing device 20 authorization information related to the third party service 300. According to the present invention, preferably
-- an accept message is sent from the data protection service 200 to the third party service 300, if access of the third party service 300 to the user related data is allowed, via the computing device 20, by the subscriber or
-- a deny message is sent from the data protection service 200 to the third party service 300, if access of the third party service 300 to the user related data is denied, via the computing device 20, by the subscriber.

In case the protected identity method is used, the user related data comprises an identifier (ID), wherein the ID is related to the subscriber, wherein the relationship between the subscriber and the ID is a trusted relationship existing (only) within the data protection service 200. Preferably, the ID is provided to the third party service 300 in a fraudulent way, i.e. without any possibility for the third party service to know the true identity of the subscriber (user identity). For example, the ID is a randomly generated digital identity, which is, in particular, generated for each session separately. Preferably, the ID is only unique to the subscriber once per session with the third party service 300 (as it changes each time).

In case the permission based system is used, no user related data is provided to the third party service 300. Instead, a granting system is used, wherein the subscriber is enabled to assign at least one piece of authorization information (e.g. permissions) per third party service 300 and, in particular, per data the subscriber wishes to use for a selected third party service 300. Preferably, the subscriber is enabled to allow different degrees of privacy or security levels. For example, personal data may be shared for payment services but not for unknown third party services 300.

Preferably, when a first security level is selected by the subscriber, the data protection service 200 protects (e.g. excludes or hides) - with regard to the third party service 300 - at least first information (and optionally second and/or third information) of the user data and/or user identity. Preferably, when the second security level is selected by the subscriber, the data protection service 200 protects at least second information (and optionally third information) of the user data and/or user identity. Preferably, when a third security level is selected by the user, the data protection service 200 (only) protects third information of the user data and/or user identity. According to one example, the first information relates to at least one of credit card details, bank account details, passport details, national insurance and/or other personal details a customer rarely gives out only in a trusted environment. According to one example, the second information relates to at least one of date of birth, email login, social network login and/or other useful sites/passwords. According to one example, the third information relates to first name, surname, address, email address, marital status, male/female, age and/or other personal details a subscriber usually gives out on a frequent basis to websites.

## Claims

1. Method for protecting and/or anonymizing a user identity and/or user data of a subscriber of a data protection service (200),
wherein the data protection service (200) is accessed, via a telecommunications network (100), by means of a computing device (20) of the subscriber of the data protection service (200), the computing device (20) being connected to the telecommunications network (100),
wherein in case that a third party service (300) is accessed by the computing device (20) via the telecommunications network (100), the third party service (300) receives user related data, the user related data being data related to the user identity and/or user data, wherein accessing the third party service (300) via the data protection service (200) involves a transmission of the user related data such that the user identity and/or the user data are at least partly protected and/or anonymized with respect to the third party service (300)
-- by means of at least partly avoiding the transmission of the plaintext of the user identity and/or the user data to the third party service (300), or
-- by means of the user related data - transmitted to the third party service (300) - being modified data with respect to the user identity and/or user data of the subscriber,
**characterized in that** the data protection service (200) creates a digital passport depending on the user identity and/or user data of the subscriber and further depending on authorization information of the subscriber, wherein the subscriber provides the authorization information for the third party service (300).

2. Method according to claim 1, wherein for a first part of the user identity and/or user data, the user related data comprise the plaintext of the user identity and/or user data, and wherein for a second part of the user identity and/or user data, the transmission to the third party service (300) is either avoided or the user related data are modified data with respect to the second part of the user identity and/or user data.

3. Method according to claim 1, wherein the user identity and/or user data are completely protected and/or anonymized with respect to the third party service (300)
-- by means of at least partly avoiding the transmission of the plaintext of the user identity and/or the user data to the third party service (300), or
-- by means of the user related data - transmitted to the third party service (300) - being modified data with respect to the user identity and/or user data of the subscriber.

4. Method according to one of the preceding claims, wherein the telecommunications network (100) is a mobile communication network, and the computing device (20) is a mobile computing device, especially a mobile phone, a smart phone, a tablet computer, or another portable computing device.

5. Method according to one of the preceding claims, wherein the third party service (300) is an application provided to the computing device (20), wherein the application is executed on the computing device (20) or on a network node of the telecommunications network (100), wherein by accessing the third party service (300) via the data protection service (200) the behaviour of the application is modified regarding the transmission of the user related data such that the user identity and/or the user data are at least partly protected and/or anonymized with respect to the third party service (300).

6. Method according to one of the preceding claims, wherein the method comprises anonymizing the user identity and the user data such that, by analysing the user related data transmitted to the third party service (300), the user identity associated with the computing device (20) is hidden.

7. System for protecting and/or anonymizing a user identity and/or user data of a subscriber of a data protection service (200), the system comprising the data protection service (200), a telecommunications network (100), and a computing device (20),
wherein the system is configured such that the data protection service (200) is accessed, via the telecommunications network (100), by means of the computing device (20) of the subscriber of the data protection service (200), the computing device (20) being connected to the telecommunications network (100),
wherein the system is configured such that in case that a third party service (300) is accessed by the computing device (20) via the telecommunications network (100), the third party service (300) receives user related data, the user related data being data related to the user identity and/or user data, wherein the system is configured such that accessing the third party service (300) via the data protection service (200) involves a transmission of the user related data such that the user identity and/or the user data are at least partly protected and/or anonymized with respect to the third party service (300)
-- by means of at least partly avoiding the transmission of the plaintext of the user identity and/or the user data to the third party service (300), or
-- by means of the user related data - transmitted to the third party service (300) - being modified data with respect to the user identity and/or user data of the subscriber,
**characterized in that** the data protection service (200) is configured to create a digital passport depending on the user identity and/or user data of the subscriber and further depending on authorization information of the subscriber, wherein the subscriber provides the authorization information for the third party service (300).

8. System according to claim 7, wherein the system is configured such that for a first part of the user identity and/or user data, the user related data comprise the plaintext of the user identity and/or user data, and wherein the system is configured such that for a second part of the user identity and/or user data, the transmission to the third party service (300) is either avoided or the user related data are modified data with respect to the second part of the user identity and/or user data.

9. System according to claim 7, wherein the system is configured such that the user identity and/or user data are completely protected and/or anonymized with respect to the third party service (300)
-- by means of at least partly avoiding the transmission of the plaintext of the user identity and/or the user data to the third party service (300), or
-- by means of the user related data - transmitted to the third party service (300) - being modified data with respect to the user identity and/or user data of the subscriber.

10. System according to one of claims 7 to 9, wherein the telecommunications network (100) is a mobile communication network, and the computing device (20) is a mobile computing device, especially a mobile phone, a smart phone, a tablet computer, or another portable computing device.

11. Mobile communication network (100) suitable for protecting and/or anonymizing a user identity and/or user data of a subscriber of a data protection service (200) in a system according to one of claims 7 to 10.

12. Program comprising a computer readable program code which, when executed on a computer or on a computing device (20) or on a network component of a telecommunications network (100) or in part on a computing device (20) and in part on a network component of a telecommunications network (100), causes the computer or the computing device (20) and/or the network component of the telecommunications network (100) to perform a method according to one of claims 1 to 6.

13. Computer program product for using a machine type communication device (20) with a telecommunications network (100), the computer program product comprising a computer program stored on a storage medium, the computer program comprising program code which, when executed on a computer or on a computing device (20) or on a network component of a telecommunications network (100) or in part on a computing device (20) and in part on a network component of a telecommunications network (100), causes the computer or the computing device (20) and/or the network component of the telecommunications network (100) to perform a method according to one of claims 1 to 6.

## Patentansprüche

1. Verfahren zum Schützen und/oder Anonymisieren einer Benutzeridentität und/oder von Benutzerdaten eines Abonnenten eines Datenschutzdienstes (200),
wobei der Zugriff auf den Datenschutzdienst (200) über ein Telekommunikationsnetz (100) mit Hilfe einer Computervorrichtung (20) des Abonnenten des Datenschutzdienstes (200) erfolgt, wobei die Computervorrichtung (20) mit dem Telekommunikationsnetz (100) verbunden ist,
wobei für den Fall, dass durch die Computervorrichtung (20) über das Telekommunikationsnetz (100) auf einen Drittdienst (300) zugegriffen wird, der Drittdienst (300) benutzerbezogene Daten empfängt, wobei die benutzerbezogenen Daten Daten sind, die sich auf die Benutzeridentität und/oder auf Benutzerdaten beziehen, wobei der Zugriff auf den Drittdienst (300) über den Datenschutzdienst (200) eine Übertragung der benutzerbezogenen Daten umfasst, dergestalt, dass die Benutzeridentität und/oder die Benutzerdaten mindestens teilweise mit Bezug auf den Drittdienst (300) geschützt und/oder anonymisiert werden:
- durch mindestens teilweises Vermeiden der Übertragung des Klartextes der Benutzeridentität und/oder der Benutzerdaten an den Drittdienst (300) oder
- indem die benutzerbezogenen Daten - die an den Drittdienst (300) übermittelt werden - modifizierte Daten mit Bezug auf die Benutzeridentität und/oder die Benutzerdaten des Abonnenten sind,
**dadurch gekennzeichnet, dass** der Datenschutzdienst (200) einen digitalen Pass in Abhängigkeit von der Benutzeridentität und/oder den Benutzerdaten des Abonnenten und des Weiteren in Abhängigkeit von Autorisierungsinformationen des Abonnenten erzeugt, wobei der Abonnent die Autorisierungsinformationen für den Drittdienst (300) bereitstellt.

2. Verfahren nach Anspruch 1, wobei für einen ersten Teil der Benutzeridentität und/oder der Benutzerdaten die benutzerbezogenen Daten den Klartext der Benutzeridentität und/oder der Benutzerdaten umfassen, und wobei für einen zweiten Teil der Benutzeridentität und/oder der Benutzerdaten die Übertragung an den Drittdienst (300) entweder vermieden wird, oder die benutzerbezogenen Daten modifizierte Daten mit Bezug auf den zweiten Teil der Benutzeridentität und/oder der Benutzerdaten sind.

3. Verfahren nach Anspruch 1, wobei die Benutzeridentität und/oder die Benutzerdaten mit Bezug auf den Drittdienst (300) vollständig geschützt und/oder anonymisiert werden;
- durch mindestens teilweises Vermeiden der Übertragung des Klartextes der Benutzeridentität und/oder der Benutzerdaten an den Drittdienst (300) oder
- indem die benutzerbezogenen Daten - die an den Drittdienst (300) übermittelt werden - modifizierte Daten mit Bezug auf die Benutzeridentität und/oder die Benutzerdaten des Abonnenten sind.

4. Verfahren nach einem der vorangehenden Ansprüche, wobei das Telekommunikationsnetz (100) ein mobiles Kommunikationsnetz ist und die Computervorrichtung (20) eine mobile Computervorrichtung, insbesondere ein Mobiltelefon, ein Smartphone, ein Tablet-Computer oder eine andere portable Computervorrichtung, ist.

5. Verfahren nach einem der vorhergehenden Ansprüche, wobei der Drittdienst (300) eine Anwendung ist, die der Computervorrichtung (20) zur Verfügung gestellt wird, wobei die Anwendung auf der Computervorrichtung (20) oder auf einem Netzknoten des Telekommunikationsnetzes (100) ausgeführt wird, wobei durch den Zugriff auf den Drittdienst (300) über den Datenschutzdienst (200) das Verhalten der Anwendung hinsichtlich der Übertragung der benutzerbezogenen Daten so modifiziert wird, dass die Benutzeridentität und/oder die Benutzerdaten mindestens teilweise mit Bezug auf den Drittdienst (300) geschützt und/oder anonymisiert werden.

6. Verfahren nach einem der vorhergehenden Ansprüche, wobei das Verfahren das Anonymisieren der Benutzeridentität und der Benutzerdaten in einer solchen Weise umfasst, dass durch die Analyse der an den Drittdienst (300) übertragenen benutzerbezogenen Daten die mit der Computervorrichtung (20) verknüpfte Benutzeridentität verborgen wird.

7. System zum Schützen und/oder Anonymisieren einer Benutzeridentität und/oder von Benutzerdaten eines Abonnenten eines Datenschutzdienstes (200), wobei das System den Datenschutzdienst (200), ein Telekommunikationsnetz (100) und eine Computervorrichtung (20) umfasst,
wobei das System so eingerichtet ist, dass der Zugriff auf den Datenschutzdienst (200) über das Telekommunikationsnetz (100) mit Hilfe der Computervorrichtung (20) des Abonnenten des Datenschutzdienstes (200) erfolgt, wobei die Computervorrichtung (20) mit dem Telekommunikationsnetz (100) verbunden ist,
wobei das System so eingerichtet ist, dass für den Fall, dass durch die Computervorrichtung (20) über das Telekommunikationsnetz (100) auf einen Drittdienst (300) zugegriffen wird, der Drittdienst (300) benutzerbezogene Daten empfängt, wobei die benutzerbezogenen Daten Daten sind, die sich auf die Benutzeridentität und/oder auf Benutzerdaten beziehen, wobei das System so eingerichtet ist, dass der Zugriff auf den Drittdienst (300) über den Datenschutzdienst (200) eine Übertragung der benutzerbezogenen Daten umfasst, dergestalt, dass die Benutzeridentität und/oder die Benutzerdaten mindestens teilweise mit Bezug auf den Drittdienst (300) geschützt und/oder anonymisiert werden:
- durch mindestens teilweises Vermeiden der Übertragung des Klartextes der Benutzeridentität und/oder der Benutzerdaten an den Drittdienst (300) oder
- indem die benutzerbezogenen Daten - die an den Drittdienst (300) übermittelt werden - modifizierte Daten mit Bezug auf die Benutzeridentität und/oder die Benutzerdaten des Abonnenten sind,
**dadurch gekennzeichnet, dass** der Datenschutzdienst (200) dafür eingerichtet ist, einen digitalen Pass in Abhängigkeit von der Benutzeridentität und/oder den Benutzerdaten des Abonnenten und des Weiteren in Abhängigkeit von Autorisierungsinformationen des Abonnenten zu erzeugen, wobei der Abonnent die Autorisierungsinformationen für den Drittdienst (300) bereitstellt.

8. System nach Anspruch 7, wobei das System so eingerichtet ist, dass für einen ersten Teil der Benutzeridentität und/oder der Benutzerdaten die benutzerbezogenen Daten den Klartext der Benutzeridentität und/oder der Benutzerdaten umfassen, und wobei das System so eingerichtet ist, dass für einen zweiten Teil der Benutzeridentität und/oder der Benutzerdaten die Übertragung an den Drittdienst (300) entweder vermieden wird, oder die benutzerbezogenen Daten modifizierte Daten mit Bezug auf den zweiten Teil der Benutzeridentität und/oder der Benutzerdaten sind.

9. System nach Anspruch 7, wobei das System so eingerichtet ist, dass die Benutzeridentität und/oder die Benutzerdaten mit Bezug auf den Drittdienst (300) vollständig geschützt und/oder anonymisiert werden:
- durch mindestens teilweises Vermeiden der Übertragung des Klartextes der Benutzeridentität und/oder der Benutzerdaten an den Drittdienst (300) oder
- indem die benutzerbezogenen Daten - die an den Drittdienst (300) übermittelt werden - modifizierte Daten mit Bezug auf die Benutzeridentität und/oder die Benutzerdaten des Abonnenten sind.

10. System nach einem der Ansprüche 7 bis 9, wobei das Telekommunikationsnetz (100) ein mobiles Kommunikationsnetz ist und die Computervorrichtung (20) eine mobile Computervorrichtung, insbesondere ein Mobiltelefon, ein Smartphone, ein Tablet-Computer oder eine andere portable Computervorrichtung, ist.

11. Mobiles Kommunikationsnetz (100), das dafür geeignet ist, eine Benutzeridentität und/oder Benutzerdaten eines Abonnenten eines Datenschutzdienstes (200) in einem System nach einem der Ansprüche 7 bis 10 zu schützen und/oder zu anonymisieren.

12. Programm, das einen computerlesbaren Programmcode umfasst, der, wenn er auf einem Computer oder auf einer Computervorrichtung (20) oder auf einer Netzkomponente eines Telekommunikationsnetzes (100) oder teilweise auf einer Computervorrichtung (20) und teilweise auf einer Netzkomponente eines Telekommunikationsnetzes (100) ausgeführt wird, den Computer oder die Computervorrichtung (20) und/oder die Netzkomponente des Telekommunikationsnetzes (100) veranlasst, ein Verfahren nach einem der Ansprüche 1 bis 6 auszuführen.

13. Computerprogrammprodukt zur Verwendung einer Kommunikationsvorrichtung (20) vom Maschinentyp mit einem Telekommunikationsnetz (100), wobei das Computerprogrammprodukt ein auf einem Speichermedium gespeichertes Computerprogramm umfasst, wobei das Computerprogramm Programmcode umfasst, der, wenn er auf einem Computer oder auf einer Computervorrichtung (20) oder auf einer Netzkomponente eines Telekommunikationsnetzes (100) oder teilweise auf einer Computervorrichtung (20) und teilweise auf einer Netzkomponente eines Telekommunikationsnetzes (100) ausgeführt wird, den Computer oder die Computervorrichtung (20) und/oder die Netzkomponente des Telekommunikationsnetzes (100) veranlasst, ein Verfahren nach einem der Ansprüche 1 bis 6 auszuführen.

## Revendications

1. Procédé de protection et/ou d'anonymisation d'une identité utilisateur et/ou de données utilisateur d'un abonné d'un service de protection de données (200),
dans lequel le service de protection de données (200) est accessible, via un réseau de télécommunications (100), au moyen d'un dispositif informatique (20) de l'abonné du service de protection de données (200), le dispositif informatique (20) étant connecté au réseau de télécommunications (100),
dans lequel, dans un cas où le dispositif informatique (20) accède à un service tiers (300) via le réseau de télécommunications (100), le service tiers (300) reçoit des données liées à l'utilisateur, les données liées à l'utilisateur étant des données liées à l'identité utilisateur et/ou aux données utilisateur, dans lequel l'accès au service tiers (300) via le service de protection de données (200) implique une transmission des données liées à l'utilisateur de sorte que l'identité utilisateur et/ou les données utilisateur soient au moins en partie protégées et/ou anonymisées par rapport au service tiers (300)
- en évitant au moins en partie la transmission du texte en clair de l'identité utilisateur et/ou des données utilisateur au service tiers (300), ou
- grâce au fait que les données liées à l'utilisateur - transmises au service tiers (300) - sont des données modifiées par rapport à l'identité utilisateur et/ou aux données utilisateur de l'abonné,
**caractérisé en ce que** le service de protection de données (200) crée un passeport numérique en fonction de l'identité utilisateur et/ou des données utilisateur de l'abonné et en fonction en outre d'informations d'autorisation de l'abonné, dans lequel l'abonné fournit les informations d'autorisation pour le service tiers (300).

2. Procédé selon la revendication 1, dans lequel pour une première partie de l'identité utilisateur et/ou des données utilisateur, les données liées à l'utilisateur comprennent le texte en clair de l'identité utilisateur et/ou des données utilisateur, et dans lequel pour une seconde partie de l'identité utilisateur et/ou des données utilisateur, la transmission au service tiers (300) est soit évitée soit les données liées à l'utilisateur sont des données modifiées par rapport à la seconde partie de l'identité utilisateur et/ou des données utilisateur.

3. Procédé selon la revendication 1, dans lequel l'identité utilisateur et/ou les données utilisateur sont totalement protégées et/ou anonymisées par rapport au service tiers (300)
- en évitant au moins en partie la transmission du texte en clair de l'identité utilisateur et/ou des données utilisateur au service tiers (300), ou
- grâce au fait que les données liées à l'utilisateur - transmises au service tiers (300) - sont des données modifiées par rapport à l'identité utilisateur et/ou aux données utilisateur de l'abonné.

4. Procédé selon l'une des revendications précédentes, dans lequel le réseau de télécommunications (100) est un réseau de communication mobile, et le dispositif informatique (20) est un dispositif informatique mobile, notamment un téléphone mobile, un téléphone intelligent, une tablette, ou un autre dispositif informatique portable.

5. Procédé selon l'une des revendications précédentes, dans lequel le service tiers (300) est une application fournie au dispositif informatique (20), dans lequel l'application est exécutée sur le dispositif informatique (20) ou sur un nœud de réseau du réseau de télécommunications (100), dans lequel en accédant au service tiers (300) via le service de protection de données (200), le comportement de l'application est modifié concernant la transmission des données liées à l'utilisateur de sorte que l'identité utilisateur et/ou les données utilisateur soient au moins en partie protégées et/ou anonymisées par rapport au service tiers (300).

6. Procédé selon l'une des revendications précédentes, dans lequel le procédé comprend l'anonymisation de l'identité utilisateur et des données utilisateur de sorte que, en analysant les données liées à l'utilisateur transmises au service tiers (300), l'identité utilisateur associée au dispositif informatique (20) soit dissimulée.

7. Système de protection et/ou d'anonymisation d'une identité utilisateur et/ou de données utilisateur d'un abonné d'un service de protection de données (200), le système comprenant le service de protection de données (200), un réseau de télécommunications (100) et un dispositif informatique (20),
dans lequel le système est configuré de sorte que le service de protection de données (200) soit accessible, via le réseau de télécommunications (100), au moyen du dispositif informatique (20) de l'abonné du service de protection de données (200), le dispositif informatique (20) étant connecté au réseau de télécommunications (100),
dans lequel le système est configuré de sorte que, dans un cas où le dispositif informatique (20) accède à un service tiers (300) via le réseau de télécommunications (100), le service tiers (300) reçoive des données liées à l'utilisateur, les données liées à l'utilisateur étant des données liées à l'identité utilisateur et/ou aux données utilisateur, dans lequel le système est configuré de sorte que l'accès au service tiers (300) via le service de protection de données (200) implique une transmission des données liées à l'utilisateur de sorte que l'identité utilisateur et/ou les données utilisateur soient au moins en partie protégées et/ou anonymisées par rapport au service tiers (300)
- en évitant au moins en partie la transmission du texte en clair de l'identité utilisateur et/ou des données utilisateur au service tiers (300), ou
- grâce au fait que les données liées à l'utilisateur - transmises au service tiers (300) - sont des données modifiées par rapport à l'identité utilisateur et/ou aux données utilisateur de l'abonné,
**caractérisé en ce que** le service de protection de données (200) est configuré pour créer un passeport numérique en fonction de l'identité utilisateur et/ou des données utilisateur de l'abonné et en fonction en outre d'informations d'autorisation de l'abonné, dans lequel l'abonné fournit des informations d'autorisation pour le service tiers (300).

8. Système selon la revendication 7, dans lequel le système est configuré de sorte que, pour une première partie de l'identité utilisateur et/ou des données utilisateur, les données liées à l'utilisateur comprennent le texte en clair de l'identité utilisateur et/ou des données utilisateur, et dans lequel le système est configuré de sorte que pour une seconde partie de l'identité utilisateur et/ou des données utilisateur, la transmission au service tiers (300) est soit évitée soit les données liées à l'utilisateur sont des données modifiées par rapport à la seconde partie de l'identité utilisateur et/ou des données utilisateur.

9. Système selon la revendication 7, dans lequel le système est configuré de sorte que l'identité utilisateur et/ou les données utilisateur soient totalement protégées et/ou anonymisées par rapport au service tiers (300)
- en évitant au moins en partie la transmission du texte en clair de l'identité utilisateur et/ou des données utilisateur au service tiers (300), ou
- grâce au fait que les données liées à l'utilisateur - transmises au service tiers (300) - sont des données modifiées par rapport à l'identité utilisateur et/ou aux données utilisateur de l'abonné.

10. Système selon l'une des revendications 7 à 9, dans lequel le réseau de télécommunications (100) est un réseau de communication mobile, et le dispositif informatique (20) est un dispositif informatique mobile, notamment un téléphone mobile, un téléphone intelligent, une tablette, ou un autre dispositif informatique portable.

11. Réseau de télécommunications (100) approprié pour protéger et/ou anonymiser une identité utilisateur et/ou des données utilisateur d'un abonné d'un service de protection de données (200) dans un système selon l'une des revendications 7 à 10.

12. Programme comprenant un code de programme lisible par ordinateur qui, lorsqu'il est exécuté sur un ordinateur ou sur un dispositif informatique (20) ou sur un composant de réseau d'un réseau de télécommunications (100) ou en partie sur un dispositif informatique (20) et en partie sur un composant de réseau d'un réseau de télécommunications (100), amène l'ordinateur ou le dispositif informatique (20) et/ou le composant de réseau du réseau de télécommunications (100) à réaliser un procédé selon l'une des revendications 1 à 6.

13. Produit-programme d'ordinateur pour utiliser un dispositif de communication de type machine (20) avec un réseau de télécommunications (100), le produit-programme d'ordinateur comprenant un programme d'ordinateur stocké sur un support de stockage, le programme d'ordinateur comprenant un code de programme qui, lorsqu'il est exécuté sur un ordinateur ou sur un dispositif informatique (20) ou sur un composant de réseau d'un réseau de télécommunications (100) ou en partie sur un dispositif informatique (20) et en partie sur un composant de réseau d'un réseau de télécommunications (100), amène l'ordinateur ou le dispositif informatique (20) et/ou le composant de réseau du réseau de télécommunications (100) à réaliser un procédé selon l'une des revendications 1 à 6.
